# EUROPEAN PATENT APPLICATION

(11) **EP 4 001 384 A1**
(43) Date of publication of application: **25.05.2022**
(21) Application number: 20840650.4
(22) Date of filing: 15.07.2020
(51) Int. Cl.: C11B 3/12, A23D 9/02

(54) **METHOD FOR PRODUCING REFINED FAT/OIL**

(30) Priority: 17.07.2019 JP 2019131580
(71) Applicant: The Nisshin OilliO Group, Ltd., Tokyo 104-8285 (JP)
(72) Inventor: YONG Chee Keat, Selangor Darul Ehsan, 42009 (MY); HIRAI Hiroshi, Selangor Darul Ehsan, 42009 (MY)
(74) Representative: Winter, Brandl - Partnerschaft mbB
(86) International application number: PCT/JP2020/027495
(87) International publication number: WO 2021/010418

(57) **Abstract**

The present invention provides a method of producing a refined oil and/or fat, comprising step B: a step of steam-distilling a raw material oil and/or fat at 240°C or more, wherein a content of saturated hydrocarbons having 20 to 35 carbon atoms in the refined oil and/or fat is 10 ppm by mass or less.

## Description

### [Technical Field]

The present invention relates to a method of producing a refined oil and/or fat with a reduced content of saturated hydrocarbons.

### [Background Art]

As an edible oil and/or fat, it is preferable to use an oil and/or fat which does not contain an impurity. In particular, it is not preferable that a mineral oil such as a lubricant which may cause health hazards be mixed in an edible oil and/or fat. In the spring of 2008, mineral oil was detected at a concentration exceeding 1000 mg/kg in sunflower oil produced in Ukraine (Non-Patent Literature 1). With this as a turning point, the European Commission decided to apply a legal limit of 50 mg/kg or less to mineral oil in sunflower crude oil and refined oil produced in Ukraine. Therefore, as a matter of course, it is desired that mineral oil be not contained in other edible oils/fats either.

Components of mineral oils which are desired to be removed include saturated hydrocarbons (SH). Since the saturated hydrocarbons (SH) are components which are not digested in the human body regardless of their origin, their content is desirably low. Japanese Patent Application Publication No. 2018-100331 states that crude palm oil originally contains saturated hydrocarbons, and discloses that, by controlling the temperature at a level not exceeding 135°C throughout the production process of obtaining crude palm oil from a palm fruit, it is possible to reduce the content of saturated hydrocarbons contained in the crude palm oil. However, since 3 kg/cm² steam (143°C), which is a cause of increased saturated hydrocarbons, is conventionally used for sterilizing a palm fruit (Non-patent Literature 2), it is difficult to obtain crude palm oil having a low saturated hydrocarbon content.

### [Prior Art Documents]

### [Patent Literature]

[Patent Literature 1] Japanese Patent Application Publication No. 2018-100331

### [Non-patent Literature]

[Non-Patent Literature 1] Eur. J. Lipid. Sci. Technol. 2008, 110, 979-981
[Non-Patent Literature 2] Bailey's Industrial Oil & Fat Products, 6th edition, volume 2, p 356

### [Summary of Invention]

As described above, since a palm fruit is heated at a temperature exceeding 135°C, ordinary crude palm oil generally contains saturated hydrocarbons at 20 ppm or more, or about 25 ppm by mass or more.

Thus, an object of the present invention is to provide a refined oil and/or fat with a saturated hydrocarbon content reduced from crude oil of an oil and/or fat having a high saturated hydrocarbon content, and a production method of obtaining the refined oil and/or fat.

Another object of the present invention is to provide an edible refined oil and/or fat having a reduced content of hydrocarbons having aromatic rings, and a production method of obtaining the refined oil and/or fat.

Still another object of the present invention is to provide a refined oil and/or fat having a reduced glycidol content and/or a monochloropropanol content, and a production method of obtaining the refined oil and/or fat.

The present inventors have made earnest studies to achieve the above objects. As a result, the present inventors have found that saturated hydrocarbons having 35 or less carbon atoms are selectively removed by steam-distilling a raw material oil and/or fat at a temperature of 240°C or more. This finding has led to the completion of the present invention.

Specifically, the present invention can include the following aspects.

[1] A method of producing a refined oil and/or fat, comprising
   step B: a step of steam-distilling a raw material oil and/or fat at 240°C or more, wherein
   a content of saturated hydrocarbons having 20 to 35 carbon atoms in the refined oil and/or fat is 10 ppm by mass or less.
[2] The method according to [1] described above, wherein
   the steam distillation of the step B is carried out for 0.5 to 9 hours.
[3] The method of producing a refined oil and/or fat according to [1] or [2] described above, further comprising, after the step B,
   step C: a step of heat-treating the oil and/or fat obtained in the step B, wherein
   a content of glycidols in the refined oil and/or fat is 1 ppm by mass or less.
[4] The method according to [3] described above, wherein
   the heat treatment step of the step C is
   step C2: a step of steam-distilling the oil and/or fat obtained in the step B at 180 to 220°C.
[5] The method according to [3] described above, wherein
   the heat treatment step of the step C includes
   step C1: a step of bringing the oil and/or fat obtained in the step B into contact with an acidic substance, and
   step C2: a step of steam-distilling the contacted oil and/or fat at 180 to 220°C.
[6] The method according to [4] or [5] described above, wherein
   the steam distillation of the step C2 is carried out for 0.5 to 9 hours. [7]
[7] The method according to any one of [1] to [6] described above, further comprising, before the step B,
   step A: a step of preparing a raw material oil and/or fat containing monochloropropanols in an amount of 2 ppm by mass or less.
[8] The method according to [7] described above, wherein
   the raw material oil and/or fat of the step A is obtained by step A1: a step of dechlorinating the oil and/or fat.
[9] The method according to [8] described above, wherein
   the dechlorination step of the step A1 is
   step A1-1: a step of washing the oil and/or fat with dechlorinated water, and/or
   step A1-2: a step of bringing the oil and/or fat into contact with an alkaline substance.
[10] The method according to [8] or [9] described above, wherein
   the raw material oil and/or fat of the step A is obtained by
   step A2: a step of steam-distilling the oil and/or fat dechlorinated in the step A1 at 210 to 260°C,
   which is carried out after the dechlorination step of the step A1.
[11] A refined oil and/or fat comprising:
   1 to 10 ppm by mass of hydrocarbons having saturated hydrocarbons having 20 to 35 carbon atoms;
   0.01 to 2 ppm by mass of glycidols; and
   0.1 to 2 ppm by mass of monochloropropanols.

The present invention makes it possible to provide a method of producing a refined oil and/or fat with a reduced content of saturated hydrocarbons, and a refined oil and/or fat with a reduced content of saturated hydrocarbons. In addition, the present invention makes it possible to provide a refined oil and/or fat with a reduced content of hydrocarbons having aromatic rings, glycidols, and/or monochloropropanols, and a production method of obtaining the refined oil and/or fat.

The embodiments of the present invention will be described in detail, but the present invention is not limited to the following embodiments. In the present specification, unless otherwise noted, "A (numerical value) to B (numerical value)" means A or more and B or less, and the ratio means mass ratio. Incidentally, any preferable embodiments and more preferable embodiments exemplified below can be combined one another even if the expression thereof are "preferable" or "more preferable". The numerical ranges are mere examples so that any ranges made by the combination of upper limit and lower limit of each range as well as the value of working examples are preferably used. The phrases "comprising", "containing", and so on can be substituted by the phrases "consisting essentially of' or "consisting of'.

### [Embodiments to Carry Out the Invention]

### <Method of Producing Refined Oil and/or Fat>

The present invention relates to a method of producing a refined oil and/or fat, comprising a step B: a step of steam-distilling a raw material oil and/or fat at 240°C or more, wherein a content of saturated hydrocarbons having 20 to 35 carbon atoms in the refined oil and/or fat is 10 ppm by mass or less. In addition, the present invention can be a method of producing a refined oil and/or fat, comprising the following steps of step A: an optional step of preparing a raw material oil and/or fat containing monochloropropanols in an amount of 2 ppm by mass or less,
step B: an essential step of steam-distilling the raw material oil and/or fat at 240°C or more, and
step C: an optional step of heat-treating the oil and/or fat obtained in the step B.

Hereinafter, the method of producing a refined oil and/or fat of the present invention is described.

### <Step A>

The step A is a step of preparing a raw material oil and/or fat containing monochloropropanols in an amount of 2 ppm by mass or less, and is an optional step of the method of producing a refined oil and/or fat of the present invention. The step A may optionally be carried out prior to the step B. The raw material oil and/or fat prepared in the step A may be a known natural or synthetic raw material, or may be a commercially available raw material adjusted by a known method to a monochloropropanol content of 2 ppm by mass or less. For example, the raw material oil and/or fat may be obtained by the following step A1:
step A1: a step of dechlorinating the oil and/or fat.

This step A1 may also include
step Al-1: a step of washing the oil and/or fat with dechlorinated water, and/or
step A1-2: a step of bringing the oil and/or fat into contact with an alkaline substance.

Moreover, the oil and/or fat dechlorinated in the step A1 may be treated in the following step A2:
step A2: a step of steam-distilling the oil and/or fat dechlorinated in the step A1 at 210 to 260°C.

The step A of the present invention is a step of obtaining an oil and/or fat in which the content of monochloropropanols contained in the oil and/or fat is 2 ppm by mass or less (preferably 1 ppm by mass or less). Here, the monochloropropanols include 3-monochloropropanediol (3-MCPD), fatty acid esters of 3-MCPD, 2-monochloropropanediol (2-MCPD), and fatty acid esters of 2-MCPD. In addition, the monochloropropanol content is a value obtained by converting the total content of 3-MCPD, fatty acid esters of 3-MCPD, 2-MCPD, and fatty acid esters of 2-MCPD to the total content of (free) 3-MCPD and (free) 2-MCPD. The production method of the present invention has a secondary effect that, by carrying out the step A, it is possible to obtain a refined oil and/or fat in which not only the content of saturated hydrocarbons but also the content of monochloropropanols is reduced. The oil and/or fat subjected to the step A is preferably a crude oil or an oil and/or fat which has undergone a partial refining step such as degumming and which does not have a history of being heated to a temperature exceeding 130°C.

The oil and/or fat used as a starting material in the step A including the steps A1, Al-1, and Al-2 is a triglyceride of a fatty acid, and it is possible to use an oil and/or fat encompassing short-chain fatty acid triglycerides whose constituent fatty acids have short-chain fatty acids having less than 6 carbon atoms, medium-chain fatty acid triglycerides whose constituent fatty acids have medium-chain fatty acids having 6 to 12 carbon atoms, and long-chain fatty acid triglycerides whose constituent fatty acids have long-chain fatty acids having more than 12 carbon atoms, for example. As the oil and/or fat, edible oils/fats suitable for food such as animal and vegetable oils can be used, and it is possible to use, for example, palm oil, palm kernel oil, shea butter, fractionated shea oil, sal butter, fractionated sal oil, illipe butter, soybean oil, rapeseed oil, cottonseed oil, safflower oil, sunflower oil, rice oil, corn oil, sesame oil, olive oil, perilla oil, linseed oil, peanut oil, milk fat, cocoa butter, and the like, mixture oils thereof, processed oils/fats, and the like.

Palm oil is particularly suitable as the oil and/or fat used as a starting material in the step A including the steps A1, A1-1, and A1-2 of the present invention. Palm oil is an oil obtained by pressing or extracting a palm fruit taken from oil palm (palm, Arecaceae Elaeis), and is known as a carotene-rich oil. Palm oil is distinguished from palm kernel oil taken from a palm seed.

Palm oil includes crude palm oil, refined palm oil, and intermediate oil of a palm oil refining step. The crude palm oil refers to oil obtained by pressing or extracting oil palm. At the time of the pressing or extraction, gum may be removed as appropriate. Crude palm oil is reddish orange and is sometimes referred to as red palm oil. When refined to remove moisture, gum, pigments, odorous components, and the like, crude palm oil becomes a refined palm oil exhibiting a pale yellow color, and the refined palm oil is widely used as an edible vegetable oil. Note that the "palm-based oil and/or fat" used in the present invention means an oil and/or fat subjected to one or more types of processing such as fractionation, hydrogenation, and interesterification, using the above palm oil (crude palm oil, and/or refined palm oil, and/or intermediate oil of the palm oil refining step) as a raw material oil and/or fat. For example, fractionated palm oil being a palm-based oil and/or fat can include palm olein and palm stearin each of which is a single-fractionated oil of palm oil, palm olein (palm super olein) and palm mid fraction each of which is a double-fractionated oil of palm olein, and palm olein (soft palm) and palm stearin (hard stearin) each of which is a double-fractionated oil of palm stearin. In addition, the "refined palm-based oil and/or fat" refers to a palm-based oil and/or fat which has been subjected to the refining step at the time of producing refined palm oil before and after the step of processing the above palm-based oil and/or fat and which has been refined to an extent suitable for food. For example, the "refined palm-based oil and/or fat" includes an oil and/or fat subjected to processing such as fractionation, hydrogenation, and/or interesterification, using refined palm oil as a raw material oil and/or fat.

The oil and/or fat used as a starting material in the steps A1, A1-1, and A1-2 of the present invention can contain saturated hydrocarbons at more than 10 ppm by mass (hereinafter also expressed as SH). The oil and/or fat preferably contains saturated hydrocarbons having 20 to 35 carbon atoms at a concentration exceeding 10 ppm by mass. The oil and/or fat is not particularly limited as long as it is an oil and/or fat containing saturated hydrocarbons at more than 10 ppm by mass. For example, the oil and/or fat may be any of crude oil, degummed oil, deacidified oil, bleached oil, and deodorized oil. In addition, the oil and/or fat used may be a palm-based oil and/or fat containing saturated hydrocarbons at more than 10 ppm by mass. However, in the case of using palm oil in the refined oil and/or fat production step B of the present invention, that palm oil is suitably palm oil or palm-based oil and/or fat obtained after undergoing the step A using crude oil containing saturated hydrocarbons preferably at more than 10 ppm by mass as a starting material.

In the present invention, the saturated hydrocarbon (SH) means a saturated hydrocarbon having about 10 to 56 carbon atoms as represented by mineral oils. It is thought that saturated hydrocarbons having high molecular weights are difficult to be absorbed into the body. In addition, it is thought that hydrocarbons having small molecular weights are easily discharged from the body. Therefore, the content of saturated hydrocarbons having 20 to 35 carbon atoms is considered to be important in the sense of metabolic accumulation in the body. The molecular weight of saturated hydrocarbon is, for example, about 70 to 1000, more importantly about 100 to 800, and further importantly about 200 to 600. The saturated hydrocarbons may be linear, and/or branched, and/or cyclic.

The dechlorination of the step A1 can use a known dechlorination method. For example, chlorine can be removed from an oil and/or fat by adding 1 to 2 parts by mass of bleaching earth (or white clay) (pH 8.2 to 8.7) to 100 parts by mass of fat and oil, followed by sufficient stirring at 110°C for 0.5 hours to remove the bleaching earth by filtration

The dechlorinated water which can be used in the washing with dechlorinated water of the step A1-1 is preferably pure water, ultrapure water, distilled water, ion exchanged water, and the like from which chlorine ions have been removed at a significant level. The washing of oil and/or fat with dechlorinated water is carried out by a method including mixing oil and/or fat in an amount of, for example, 100 parts by mass with dechlorinated water at preferably 70 to 100°C and more preferably 80 to 95°C in an amount of preferably 5 to 100 parts by mass and more preferably 10 to 50 parts by mass, followed by stirring at preferably 70 to 100°C and more preferably 80 to 95°C. Thereafter, water may be removed from the oil and/or fat by centrifugation.

In the step A1-2, the oil and/or fat comes into contact with the alkaline substance, and the contacted oil and/or fat is separated from the alkaline substance. Here, the alkaline substance includes hydroxides, carbonates, phosphates, organic acid salts, alkoxide compounds, and the like of alkali metals or alkaline earth metals, or alkaline bleaching earth, basic activated carbon, and the like. More specific examples include sodium hydroxide, potassium hydroxide, calcium hydroxide, sodium carbonate, sodium hydrogen carbonate, sodium methoxide, sodium ethoxide, and the like, or bleaching earth such as alkaline bleaching earth, basic coconut shell activated carbon, and the like. The contact between the oil and/or fat and the alkaline substance in the step A1-2 takes place at a temperature of preferably 130°C or less, more preferably 80 to 125°C, and further preferably 90 to 115°C for e.g. 1 minute to 5 hours, preferably 10 minutes to 2 hours, more preferably 15 minutes to 1 hour, and further preferably 0.5 hours (± 5 to 10 minutes), with optional stirring. The alkaline substance has, for example, an alkalinity of, for example, pH = more than 7, preferably pH 7.5 to 14, more preferably pH 8 to 10, and further preferably pH 8.5 ± 0.5. Regarding the alkaline substance, the alkaline substance is suitably 0.1 to 10 parts by mass, preferably 0.5 to 5 parts by mass, and more preferably about 1 part by mass ± 1 part by mass relative to, for example, 100 parts by mass of oil and/or fat before contact.

The contact method between the oil and/or fat and the alkaline substance is, for example, a method including adding to the oil and/or fat an aqueous solution of sodium hydroxide in an amount 0.8 to 1.2 times the neutralization equivalent of free fatty acids contained in the oil and/or fat, followed by stirring. Thereafter, the foots are removed from the oil and/or fat by centrifugation. Moreover, water is added to the oil and/or fat and stirred, and then the aqueous layer is removed by centrifugation. The oil and/or fat may be subjected to treatment such as dehydration under reduced pressure, if necessary. In addition, another contact method between the oil and/or fat and the alkaline substance is a method including adding preferably about 0.5 to 5 parts by mass and more preferably about 1 to 3 parts by mass of alkaline bleaching earth (water dispersed with bleaching earth exhibits a pH of preferably 8.0 or more) to, for example, 100 parts by mass of oil and/or fat before contact, followed by stirring for 5 to 60 minutes (preferably for 10 to 40 minutes) at 80 to 130°C (preferably 90 to 120°C). Thereafter, the alkaline bleaching earth may be removed by filtration.

The step Al-1 and/or the step Al-2 may be repeated multiple times. In addition, it is more effective to appropriately combine the step Al-1 and the step Al-2. In the case of carrying out both the step Al-1 and the step A1-2, the step A1-2 may be carried out after the step A1-1, or the step A1-1 may be carried out after the step A1-2.

The step A2 of the present invention is a step of steam-distilling the oil and/or fat dechlorinated in the step A1 at 210 to 260°C.

The temperature of the oil and/or fat steam-distilled in the step A2 is preferably 215°C to 250°C and more preferably 220°C to 235°C. Moreover, the duration for steam distillation of the oil and/or fat at 210 to 260°C is not particularly limited. The duration for steam distillation can be continued as long as the content of monochloropropanols contained in the oil and/or fat does not exceed 2 ppm by mass, and the duration for steam distillation is preferably 0.3 to 3 hours and more preferably 0.5 to 2 hours. Steam distillation may be carried out continuously, or may be carried out multiple times discontinuously as in the case of batch processing. In the case of discontinuous steam distillation, the sum of the net durations of steam distillation may be the duration subjected to steam distillation.

In addition, in the step A2, the blowing amount of the steam during the steam distillation of oil and/or fat is not particularly limited. However, the steam is preferably 0.1 to 10 parts by mass, more preferably 0.5 to 7 parts by mass, and further preferably 1 to 5 parts by mass relative to 100 parts by mass of oil and/or fat. In addition, in the step A2, the pressure during the steam distillation is not particularly limited. However, the pressure is preferably 13.33 to 1333 Pa (0.1 to 10 torrs), more preferably 66.67 to 666.7 Pa (0.5 to 5 torrs), and further preferably 133.3 to 533.3 Pa (1 to 4 torrs).

### <Step B>

The step B is a step of steam-distilling a raw material oil and/or fat at 240°C or more, and is an essential step of the method of producing a refined oil/fat of the present invention. By subjecting the oil and/or fat to steam distillation at 240°C or more, the content of saturated hydrocarbons having 20 to 35 carbon atoms contained in the oil and/or fat can be reduced to 10 ppm by mass or less.

Here, the raw material oil and/or fat is preferably an oil and/or fat used as a starting material in the step A (optionally including the step A1-1, the step A1-2, and the like), or an oil and/or fat obtained after undergoing the step A. The raw material oil and/or fat subjected to the step B contains saturated hydrocarbons (SH) having 20 to 35 carbon atoms preferably at a concentration exceeding 10 ppm by mass. The content of saturated hydrocarbons (SH) having 20 to 35 carbon atoms contained in the raw material oil and/or fat subjected to the step B is more preferably 10.5 to 100 ppm by mass and further preferably 10.5 to 50 ppm by mass. By undergoing the step B of steam-distilling the oil and/or fat at 240°C or more, the content of saturated hydrocarbons having 20 to 35 carbon atoms contained in the oil and/or fat is reduced. By undergoing the step B, the content of saturated hydrocarbons having 20 to 35 carbon atoms contained in the oil and/or fat is reduced to 10 ppm by mass or less, reduced to preferably 7 ppm by mass or less, reduced to more preferably 5 ppm by mass or less, and reduced to further preferably 3 ppm by mass or less. The lower limit of the content of saturated hydrocarbons having 20 to 35 carbon atoms contained in the oil and/or fat, having undergone the step B, is not particularly limited, but is preferably 1 ppm by mass or more and more preferably 1.5 ppm by mass or more. The lower limit and the upper limit of the content of saturated hydrocarbons having 20 to 35 carbon atoms contained in the oil and/or fat, having undergone the step B, can be arbitrarily combined.

In addition, by undergoing the step B of steam-distilling the oil and/or fat at 240°C or more, a secondary effect is expected that the content of hydrocarbons having aromatic rings (hereinafter also expressed as AH) having 20 to 35 carbon atoms contained in the oil and/or fat can be reduced. The oil and/or fat subjected to the step B contains hydrocarbons having aromatic rings (AH) having 20 to 35 carbon atoms preferably at a concentration exceeding 10 ppm by mass, more preferably at 10.5 to 100 ppm by mass, and further preferably at 10.5 to 50 ppm by mass. By undergoing the step B, the content of hydrocarbons having aromatic rings having 20 to 35 carbon atoms contained in the oil and/or fat is reduced to preferably 10 ppm by mass or less, reduced to more preferably 7 ppm by mass or less, reduced to further preferably 5 ppm by mass or less, and reduced to especially preferably 3 ppm by mass or less. The lower limit of the content of hydrocarbons having aromatic rings having 20 to 35 carbon atoms contained in the oil and/or fat, having undergone the step B, is not particularly limited, but is preferably 1 ppm by mass or more and more preferably 1.5 ppm by mass or more. The lower limit and the upper limit of the content of hydrocarbons having aromatic rings having 20 to 35 carbon atoms contained in the oil and/or fat, having undergone the step B, can be arbitrarily combined. Note that the concentration of saturated hydrocarbons (SH) and hydrocarbons having aromatic rings (AH) is a numerical value which is targeted and achieved even in the case of including the step B as well as a further different step.

The temperature of the steam distillation is not particularly limited as long as it is 240°C or more. However, for the purpose of efficiently reducing the content of saturated hydrocarbons, the temperature is preferably 250°C or more and more preferably 255°C or more. The upper limit of the temperature of the steam-distilled oil and/or fat is not particularly limited, but is preferably 280°C or less, more preferably 270°C or less, and further preferably 265°C or less. The lower limit and the upper limit of the temperature of the steam-distilled oil and/or fat may be arbitrarily combined, but suitably are temperatures of, for example, 240 to 300°C, preferably 250 to 280°C, and more preferably 260°C ± 5°C. In addition, the duration for steam distillation is not particularly limited, but the lower limit of the duration for steam distillation can be 0.5 hours or more, 1 hour or more, 1.5 hours or more, 2 hours or more, 2.5 hours or more, and 3 hours or more. In addition, the upper limit of the duration for steam distillation can be 9 hours or less, 8.5 hours or less, 8 hours or less, 7.5 hours or less, 6 hours or less, and 5.5 hours or less. The lower limit and the upper limit of the duration for steam distillation can be arbitrarily combined, but the steam distillation is suitably carried out for e.g. 0.5 to 9 hours, preferably 0.75 to 5 hours, more preferably 1 to 2 hours, and further preferably 1.5 hours (± 5 to 10 minutes).

The step B may be carried out continuously (CSTR) or discontinuously (batchwise). In the batchwise case, with the steam distillation step of the step B as one cycle (one batch), it is suitable to repeat the step, for example, one to five times (one to five batches), preferably two to four times (two to four batches), and more preferably three times (three batches). In the batchwise case, the sum of the net durations of steam distillation may be the duration subjected to steam distillation.

The blowing amount of the steam during the steam distillation is not particularly limited as long as it is an amount enabling sufficient distillation of the raw material oil and/or fat. However, it is suitable that the steam is 0.1 to 10 parts by mass, more preferably 0.5 to 7 parts by mass, further preferably 1 to 5 parts by mass, and particularly preferably about 2.5 parts by mass ± 1.5 parts by mass relative to, for example, 100 parts by mass of raw material oil and/or fat. The pressure during the steam distillation is not particularly limited, but is preferably 13.33 to 1333 Pa (0.1 to 10 torrs), more preferably 66.67 to 666.7 Pa (0.5 to 5 torrs), and further preferably 133.3 to 533.3 Pa (1 to 4 torrs).

### <Step C>

The step C is a step of heat-treating the oil and/or fat obtained in the step B, and is an optional step of the method of producing a refined oil and/or fat of the present invention.

The oil and/or fat obtained in the step B may be used as a refined oil and/or fat, but may further be heat-treated by the step C. The present invention has a secondary effect that, by carrying out the step C, it is possible to obtain an edible oil and/or fat in which not only the content of saturated hydrocarbons but also the content of glycidols is reduced.

Here, it is suitable to heat-treat the oil and/or fat obtained in the step B at a temperature of, for example, 180 to 230°C, preferably 190°C to 220°C, more preferably 195 to 210°C, and further preferably 200°C ± 5°C. In addition, the duration of the heating step may be carried out for a duration sufficient for reducing the glycidol content to 2 ppm by mass or less. The lower limit of the heating step duration can be, for example, 0.5 hours or more, 1 hour or more, 1.5 hours or more, 2 hours or more, 2.5 hours or more, and 3 hours or more, and the upper limit of the heating step duration can be 9 hours or less, 8.5 hours or less, 8 hours or less, 7.5 hours or less, 6 hours or less, and 5.5 hours or less, for example 0.5 to 9 hours, preferably 0.75 to 5 hours, more preferably 1 to 2 hours, and further preferably 1.5 hours (± 5 to 10 minutes).

The step C may be carried out continuously (CSTR) or discontinuously (batchwise). In the batchwise case, with the heating step of the step C as one cycle (one batch), it is suitable to repeat the step, for example, one to five times (one to five batches), preferably two to four times (two to four batches), and more preferably three times (three batches). In the batchwise case, the sum of the net durations of heat treatment may be the duration subjected to heat treatment. The heat treatment may be steam distillation in which the blowing amount of steam and the pressure are the same as those in the step B.

The step C may also be carried out by the following step C2 or step C1 and/or C2.
step C1: a step of bringing the oil and/or fat obtained in the step B into contact with an acidic substance.
step C2: a step of steam-distilling the contacted oil and/or fat or the oil and/or fat obtained in the step B at 180 to 220°C.

Regarding the steps C1 and C2, only the step C2 may be carried out as the step C, or the step C2 may be carried out after the step C1. In the case of only carrying out the step C2, the raw material of the step C2 is the "oil and/or fat obtained in the step B."

The contact between the oil and/or fat and the acidic substance in the step C1 takes place at a temperature of preferably 130°C or less, more preferably 80 to 125°C, and further preferably 90 to 115°C for e.g. 1 minute to 5 hours, preferably 10 minutes to 2 hours, more preferably 15 minutes to 1 hour, and further preferably 0.5 hours (± 5 to 10 minutes), with optional stirring. The acidic substance brought into contact with the oil and/or fat in the step C1 is not particularly limited, and includes, for example, processing aids exhibiting acidity, processing aids exhibiting aqueous acidity, processing aids containing acidic gas, processing aids having residual acids, and the like. The acidic substance specifically includes bleaching earth, activated carbon, silica gel, ion exchange resins, filter aids, zeolites, fibers, catalysts, enzymes, acid treated products thereof, inorganic acids, organic acids, and the like, and these can be used singly or in combination. Note that, in the present invention, bleaching earth refers to clay mainly composed of montmorillonite. The bleaching earth is not particularly limited, and includes any of acidic bleaching earth and activated bleaching earth which is an acidic bleaching earth subjected to activation treatment. In addition, in the present invention, raw materials of activated carbon usable can include, for example, coke, artificial graphite, charcoal, bone charcoal, glassy carbon, carbon fiber, carbon black, silk, and the like. The raw material of activated carbon is particularly preferably one of plant origin such as wood, seed coat, grain residue, bark, palm shell, and the like, and most preferably wood. In addition, activation may be carried out with any of the acidic substances described above. Known activation methods include various methods such as steam activation, gas activation, and chemical activation, and one activated by any of the activation methods can be preferably used. Among these, one subjected to chemical activation is preferable. Among the chemical activation, one activated with zinc chloride, phosphoric acid, sulfuric acid, calcium chloride, or the like is more preferable, and one activated with phosphoric acid is most preferable. Moreover, even one subjected to alkali activation can be preferably used as long as it is thereafter treated to exhibit acidity. In the present invention, it is possible to use, as a filter aid, diatomaceous earth, cellulose, perlite, and the like. It is possible to use, as a fiber, a chemical fiber, a plant fiber, an animal fiber, and the like. Among these, as the acidic substance of the present invention, acidic bleaching earth or acidic activated carbon is preferable, and the use in combination of activated bleaching earth and acidic activated carbon is more preferable. The amount of the acidic substance added is not particularly limited, but in the case of an acidic substance other than an inorganic acid, the amount is preferably 0.01 to 10 parts by mass and further preferably 1 to 7 parts by mass relative to 100 parts by mass of oil and/or fat. An acidic substance other than an inorganic acid is generally solid and is preferably removed by filtration after contact.

In the method including using an inorganic acid as the acidic substance (acidic processing aid), the type of the inorganic acid is not particularly limited, and includes, for example, sulfuric acid, phosphoric acid, nitric acid, hydrochloric acid, and the like, and these can be used singly or in combination. Among these, sulfuric acid, phosphoric acid, nitric acid, and hydrochloric acid are preferable from the viewpoint of easy availability. In addition, the inorganic acid may be added to the oil and/or fat as it is. However, due to the small amount added, an inorganic acid is preferably added as an aqueous solution. The amount of the inorganic acid added to the oil and/or fat is not particularly limited, but is preferably 0.001 to 0.7 parts by mass and further preferably 0.001 to 0.05 parts by mass relative to 100 parts by mass of oil and/or fat. In addition, after adding an inorganic acid followed by contact, it is preferable to remove the inorganic acid by water washing or the like.

In the method including adding an organic acid having 1 to 8 carbon atoms as the acidic substance (acidic processing aid), the organic acid is not particularly limited, and includes, for example, oxalic acid, citric acid, acetic acid, malic acid, tartaric acid, ascorbic acid, erythorbic acid, and the like. It is preferable to add a water-soluble organic acid as an aqueous solution in order to enhance the dispersibility. The amount of the organic acid added to the oil and/or fat is not particularly limited. However, the amount added is in a range of preferably 0.001 to 10 parts by mass relative to 100 parts by mass of oil and/or fat, and more preferably such that the acid number of oil and/or fat is 2 to 30. In addition, after exposure under acidic conditions, it is preferable to remove an organic acid having 1 to 4 carbon atoms by filtration or water washing, and an organic acid having 5 or more carbon atoms by a means such as distillation.

As the acidic substance, it is possible to use, for example, a substance having an acidity of pH = less than 7, preferably pH 1 to 6.5, and more preferably pH 5 ± 1. The contact between the acidic substance and the oil and/or fat takes place at preferably 20 to 260°C. In particular, in the case of contact with an acidic processing aid, the contact takes place at more preferably 60 to 200°C and at further preferably 90 to 160°C. The acidic substance may be removed from the system by filtration or the like.

In the step C2, the contacted oil and/or fat or the oil and/or fat obtained in the step B is steam-distilled at 180 to 230°C. The steam distillation step can reduce the content of glycidols contained in the oil and/or fat to 2 ppm by mass or less, preferably 1.5 ppm by mass or less, and more preferably 1 ppm by mass or less. Here, the steam distillation may be carried out in the ranges of the temperature and duration of the heating step of the step C. For example, in the case of carrying out the step C1, it is suitable that the temperature in the step C2 is a temperature of 180 to 230°C, preferably 190°C to 220°C, more preferably 195 to 210°C, and further preferably 200°C ± 5°C, and it is suitable that the duration for steam distillation is preferably 0.3 to 3 hours, more preferably 0.5 to 2 hours, and further preferably 1.5 hours (± 5 to 10 minutes). The blowing amount of the steam during the steam distillation is not particularly limited as long as it is an amount enabling sufficient distillation of the raw material oil and/or fat. However, it is suitable that the steam is 0.5 to 20 parts by mass, preferably 0.1 to 10 parts by mass, more preferably 0.5 to 7 parts by mass, further preferably 1 to 5 parts by mass, and about 2.5 parts by mass ± 1.5 parts by mass relative to, for example, 100 parts by mass of raw material oil and/or fat. The pressure during the steam distillation is not particularly limited, but is preferably 13.33 to 1333 Pa (0.1 to 10 torrs), more preferably 66.67 to 666.7 Pa (0.5 to 5 torrs), and further preferably 133.3 to 533.3 Pa (1 to 4 torrs).

The step A, the step B, the step C, and substeps thereof (for example, the step A1-1, the step C2, and the like) do not have to be carried out continuously. For example, the step A and the step B can sandwich one or more steps selected from refining steps such as degumming, deacidification, bleaching, and deodorization and/or one or more processing steps selected from fractionation, hydrogenation, interesterification, and the like. The step B and the step C can also sandwich the same steps as above. In addition, the step A, the step B, and the step C can be carried out separately in different countries or regions. For example, the step A can be carried out in country X, and after export to country Y, the step B and the step C can be carried out in country Y. In addition, the step A and the step B can be carried out in country X, and after export to country Y, the step C can be carried out in country Y.

### <Refined Oil and/or Fat>

It is suitable that the refined oil and/or fat of the present invention obtained as described above is a refined oil and/or fat in which the content of saturated hydrocarbons having 20 to 35 carbon atoms is 10 ppm by mass or less.

Here, the content of saturated hydrocarbons (SH) having 20 to 35 carbon atoms in the refined oil and/or fat is, for example, 10 ppm by mass or less, preferably 7 ppm by mass or less, more preferably 5 ppm by mass or less, and further preferably 3 ppm by mass or less. In addition, the content of saturated hydrocarbons (SH) having 20 to 35 carbon atoms in the refined oil and/or fat is desirably as small as possible and most preferably 0 ppm by mass, and is, for example, 1.5 ppm by mass or more, preferably 1 ppm by mass or more, more preferably 0.5 ppm by mass or more, further preferably 0.1 ppm by mass or more, and particularly preferably 0.01 ppm by mass or more. The upper limit value and the lower limit value may be combined as appropriate to make a preferable range.

In addition, the refined oil and/or fat of the present invention obtained as described above is preferably such that the amount of hydrocarbons having aromatic rings (AH) has also been reduced. Specifically, the content of hydrocarbons having aromatic rings (AH) having 20 to 35 carbon atoms in the refined oil and/or fat of the present invention is, for example, 10 ppm by mass or less, preferably 8 ppm by mass or less, more preferably 6 ppm by mass or less, and further preferably 4.5 ppm by mass or less. In addition, the content of hydrocarbons having aromatic rings (AH) having 20 to 35 carbon atoms in the refined oil and/or fat is desirably as small as possible and most preferably 0 ppm by mass, and is, for example, 0.01 ppm by mass or more, preferably 0.1 ppm by mass or more, more preferably 0.5 ppm by mass or more, and further preferably 1 ppm by mass or more. The upper limit value and the lower limit value may be combined as appropriate to make a preferable range.

Further, the refined oil and/or fat of the present invention obtained as described above is preferably such that the amount of glycidols and monochloropropanols has also been reduced. Specifically, the glycidols whose reduction is desired can include glycidol itself as well as glycidol fatty acid esters. In addition, the monochloropropanols include those described above, and particularly include 3-monochloropropanediol (3-MCPD), fatty acid esters of 3-MCPD, 2-monochloropropanediol (2-MCPD), and fatty acid esters of 2-MCPD. More specifically, the total amount of the contents of glycidols (in conversion of the amount of free glycidol) is preferably 2 ppm by mass or less, more preferably 0.01 to 1.5 ppm by mass, further preferably 0.05 to 0.8 ppm by mass, and especially preferably 0.1 to 0.5 ppm. The total amount of the contents of 3-monochloropropanol and fatty acid esters thereof (in conversion of the amount of free monochloropropanol) is preferably 2 ppm by mass or less, more preferably 0.01 to 1.5 ppm by mass, further preferably 0.05 to 1.0 ppm by mass, and especially preferably 0.1 to 0.8 ppm. The total amount of the contents of 2-monochloropropanol and fatty acid esters thereof (in conversion of the amount of free monochloropropanol) is preferably 1.5 ppm by mass or less, more preferably 0.01 to 1.0 ppm by mass, further preferably 0.05 to 0.8 ppm by mass, and especially preferably 0.1 to 0.6 ppm. The total amount of the contents of monochloropropanols (in conversion of the amount of free monochloropropanol) is preferably 2 ppm by mass or less, more preferably 0.01 to 1.5 ppm by mass, further preferably 0.05 to 1.2 ppm by mass, and especially preferably 0.1 to 1.0 ppm by mass.

As a more preferable embodiment, the edible refined oil and/or fat having undergone the production step of the present invention can be such that the contents of saturated hydrocarbons and hydrocarbons having aromatic rings having 20 to 35 carbon atoms are each 1 to 10 ppm by mass, the glycidol content is 0.01 to 2 ppm by mass, and the monochloropropanol content is 0.1 to 2 ppm by mass. A further preferable embodiment of the edible refined oil and/or fat having undergone the production step of the present invention is such that the contents of saturated hydrocarbons and hydrocarbons having aromatic rings having 20 to 35 carbon atoms are each 1 to 5 ppm by mass, the glycidol content is 0.05 to 1.0 ppm by mass, and the monochloropropanol content is 0.5 to 1.5 ppm by mass. In particular, even in the case of a palm oil and/or a palm-based oil and/or fat, the employment of the production step of the present invention enables obtaining a refined palm oil and/or a refined palm-based oil having the above-described improved properties.

The saturated hydrocarbons contained in the oil and/or fat can also be removed by, for example, molecular distillation, thin-film distillation, short-path distillation, and the like. However, the above distillation means require a high degree of vacuum 100 to 1000 times as high as steam distillation, and therefore the amount of oil and/or fat which can be treated is limited to a very small amount. Even in the case of steam distillation, the present invention, when applied under specific conditions, can reduce the content of saturated hydrocarbons having 20 to 35 carbon atoms to be removed most, making it possible to provide a stable amount of edible oil and/or fat.

In addition, the content of saturated hydrocarbons and the content of hydrocarbons having aromatic rings contained in the oil and/or fat can be measured by, for example, a method using gas chromatography specifically described in Example. In addition, the content of glycidols and monochloropropanols contained in oil and/or fat can be measured in accordance with the American Oil Chemists' Society Official Method (AOCS Official Method Cd29a-13).

The refined oil and/or fat of the present invention having the above-described improved properties, particularly the refined oil and/or fat obtained with a refined palm oil as a raw material and/or the refined oil and/or fat obtained with a refined palm-based oil and/or fat as a raw material is highly safe for food. The refined oil and/or fat of the present invention having specific improved properties can be used for any foods and drinks for which refined palm oils and/or refined palm-based oils/fats are conventionally used. Preferable foods and drinks containing the refined oil and/or fat of the present invention include, for example, condiments such as edible oil, margarine, shortening, and mayonnaise, bread, confectionery, chocolate, foods and drinks for infants such as formula, instant noodles, and the like. When any of those foods and drinks is set to 100% by mass as a whole, the food or drink may contain the refined oil and/or fat of the present invention in an amount of, for example, 1% or more, 5% by mass or more, 10% by mass or more, 25% by mass or more, 50% by mass or more, 75% by mass or more, and 90% by mass or more, and in an amount of, for example, 90% by mass or less, 75% by mass or less, 50% by mass or less, 25% by mass or less, 10% by mass or less, and 5% by mass or less. The lower limit and the upper limit thereof can be arbitrarily combined. The refined oil and/or fat of the present invention may be contained in an amount of more preferably 1 to 100% by mass, and the refined oil and/or fat of the present invention may be contained in an amount of further preferably 5 to 95% by mass.

### [Examples]

Hereinafter, the present invention is described in more detail using Example. However, the present invention is not limited to the content of the following Embodiment.

### <Measurement of Content of Saturated Hydrocarbons (SH) and Content of Hydrocarbons having Aromatic Rings (AH)>

The content of saturated hydrocarbons (SH) and the content of hydrocarbons having aromatic rings (AH) were measured in accordance with the following method.
(1) An oil and/or fat sample in an amount of 200 mg is added with 3 ppm by mass of bicyclohexyl as an internal standard of saturated hydrocarbons and 3 ppm by mass of 1,3,5-tri-tert-butylbenzene as an internal standard of aromatic hydrocarbons, followed by dissolution with 1 mL of hexane.
(2) The sample of (1) is placed in a 2 g silica solid phase extraction column conditioned with hexane, followed by adsorption.
(3) An eluent A (hexane 100% by volume) and an eluent B (hexane 85% by volume and dichloromethane 15% by volume) are used to elute saturated hydrocarbons and aromatic hydrocarbons. The eluent A is first added and 1 mL is removed. After that, 2 mL of the eluent A and 1 mL of the eluent B are collected to form a saturated hydrocarbon fraction. Next, the eluent B is added, and 8 mL is collected to form an aromatic hydrocarbon fraction.
(4) Each of the fractions is concentrated to about 300 µL and measured by gas chromatography (on-column injection).
(5) Gas Chromatography Measurement Conditions

### 1. Column

Pre-column: deactivated fused silica column, length 10 m, inner diameter 0.53 mm
Analysis column: 100% dimethylpolysiloxane, length 15 m, inner diameter 0.32 mm, film thickness 0.1 µm

### 2. Injection

Carrier gas: helium
Injection volume: 40 µL
Inlet temperature conditions: 60°C (retained for 4 minutes) → 20°C/min temperature rise → 380°C (retained for 15.5 minutes)
Pressure conditions: 60 kPa (retained for 4 minutes) → 70 kPa/min pressure rise → 130 kPa (retained for 30.5 minutes)
Column flow rate: 3.55 mL/min

### 3. Oven

Temperature: 50°C (retained for 4 minutes) → 20°C/min temperature rise → 380°C (retained for 15 minutes)

### 4. FID Detector

Temperature: 380°C

(6) The chromatogram obtained in the above gas chromatography measurement is used to compare the areas of the internal standards with the areas of the hydrocarbons (the area of the humps which rise from the baseline), thereby calculating the saturated hydrocarbon content and the aromatic hydrocarbon content.

### <Measurement of Glycidols and Monochloropropanols Contents>

Measurement was carried out in accordance with the American Oil Chemists' Society Official Method (AOCS Official Method Cd29a-13). Note that the glycidols to be detected were glycidol and glycidol fatty acid esters. The glycidol content was obtained by converting the amount of glycidol and glycidol fatty acid esters to the amount of free glycidol. Note that, regarding the monochloropropanols, the 3-monochloropropanols to be detected were 3-monochloropropanol and 3-monochloropropanol fatty acid esters, and the 3-monochloropropanol content was obtained by converting the amount of 3-monochloropropanol and 3-monochloropropanol fatty acid esters to the amount of free monochloropropanol. The 2-monochloropropanols to be detected were 2-monochloropropanol and 2-monochloropropanol fatty acid esters, and the 2-monochloropropanol content was obtained by converting the amount of 2-monochloropropanol and 2-monochloropropanol fatty acid esters to the amount of free monochloropropanol. The monochloropropanol content was obtained by converting the total amount of 3-monochloropropanols and 2-monochloropropanols to the amount of free monochloropropanol.

### <Test Example 1 - Step A>

A commercially available crude palm oil was washed with 10 parts by mass of deionized water relative to 100 parts by mass of the crude oil in accordance with a conventional method (step A1-1), and then 0.05 parts by mass of 85% phosphoric acid was added and stirred for phosphoric acid degumming. To 100 parts by mass of the obtained phosphoric acid degummed oil, 1 part by mass of bleaching earth (pH 8.2) was added and sufficiently stirred at 110°C for 0.5 hours (bleaching: step A1-2). The bleaching earth was removed by filtration to obtain a bleached oil. Steam distillation was carried out by blowing 5 mass parts by mass of steam to 100 parts by mass of the bleached oil for 1.5 hours under the conditions of 230°C and about 266.7 Pa (2 torrs) (deodorization treatment: step A2). The obtained palm oil was subjected to dry fractionation in two steps to obtain palm super olein having an iodine value of 63 (RBD PL63).

### <Test Example 1-Step B>

Batchwise steam distillation (260°C, about 266.7 Pa (2 torrs), 5 parts by mass of steam blown to 100 parts by mass of oil and/or fat, duration 1.5 hours) was repeated three batches using RBD_PL63 obtained above, and RBD3D PL63 was obtained. The SH content and AH content were measured before steam distillation and at the end of each batch. Similarly, the monochloropropanol and glycidol contents were also measured. Table 1 presents the results. Each batch process or the continuous batch process of the above steam distillation corresponds to the step B.

### <Test Example 1-Step C>

Activated bleaching earth (pH 6) in an amount of 2 parts by mass was added to 100 parts by mass of RBD3D_PL63 obtained by the above continuous batchwise steam distillation, followed by sufficient stirring at 110°C for 0.5 hours (bleaching: step CI). The activated bleaching earth was removed by filtration to obtain a bleached oil. Steam distillation was carried out by blowing 5 mass parts by mass of steam to 100 parts by mass of the bleached oil for 1.5 hours under the conditions of 200°C and about 266.7 Pa (2 torrs) (deodorization treatment: step C2), and RBD3DBD PL63 was obtained. The SH content and AH content of the obtained RBD3DBD PL63 were measured. Similarly, the monochloropropanol and glycidol contents were also measured. Table 1 presents the results.

| [Table 1] Results of Analyzing Oil in Each Step | | | | | | |
|---|---|---|---|---|---|---|
| | | RBD_ PL63 (Raw Material of Step B) | After Batch 1 of Steam Blowing in Step B | After Batch 2 of Steam Blowing in Step B | After Batch 3 of Steam Blowing in Step B (RBD3D PL63: Resultant Product of Step B) | RBD3DBD_ PL63 (Resultant Product of Step C) |
| Total Duration of Steam Distillation in Step B (Hour) | | 0 | 1.5 | 3 | 4.5 | - |
| | Number of Carbon Atoms | | | | | |
| SH Content (ppm by Mass) | Less Than 20 | Less Than 2 | Less Than 2 | Less Than 2 | Less Than 2 | Less Than 2 |
| | 20 to 35 | 12.0 | 5.0 | 3.0 | 1.5 | 2.4 |
| | Over 35 | 11.9 | 11.7 | 10.6 | 9.7 | 10.2 |
| AH Content (ppm by Mass) | Less Than 20 | Less Than 2 | Less Than 2 | Less Than 2 | Less Than 2 | Less Than 2 |
| | 20 to 35 | 14.4 | 5.5 | 4.3 | 2.4 | 2.7 |
| | Over 35 | 4.5 | 5.1 | 5.1 | 4.1 | 4.4 |
| | | | | | | |
| 3-MCPD Content (ppm by Mass) | | 0.41 | 0.56 | 0.68 | 0.65 | 0.72 |
| 2-MCPD Content (ppm by Mass) | | 0.16 | 0.25 | 0.32 | 0.31 | 0.38 |
| Glycidol Content (ppm by Mass) | | 1.41 | 1.7 | 2.34 | 1.47 | 0.08 |

### <Test Example 2 - Step A>

A commercially available crude palm oil was added with 0.05 parts by mass of 85% phosphoric acid and stirred in accordance with a conventional method, followed by phosphoric acid degumming. To 100 parts by mass of the obtained phosphoric acid degummed oil, 1 part by mass of bleaching earth (pH 8.7) was added and sufficiently stirred at 110°C for 0.5 hours (bleaching (alkaline adsorbent treatment): step A1-2). The bleaching earth was removed by filtration to obtain a bleached oil. A semi-continuous deodorizing apparatus was used to carry out steam distillation by blowing 3 mass parts by mass of steam to 100 parts by mass of the bleached oil for 1.5 hours under the conditions of 230°C and about 266.7 Pa (2 torrs) (deodorization treatment: step A2). The obtained palm oil was subjected to dry fractionation in two steps to obtain palm super olein having an iodine value of 63 (RBD PL63).

### <Test Example 2 - Step B>

The above-obtained RBD_PL63 in an amount of 50 tons was used to carry out steam distillation (270°C, about 266.7 Pa (2 torrs), 3 parts by mass of steam blown to 100 parts by mass of oil and/or fat, duration 1.5 hours) with a semi-continuous deodorizing column, and RBDD_PL63 was obtained. The SH content and AH content were measured before and after steam distillation. Similarly, the monochloropropanol and glycidol contents were also measured. Table 2 presents the results. The above steam distillation corresponds to the step B.

### <Test Example 2 - Step C>

Activated bleaching earth (pH 5.0) in an amount of 2.5 parts by mass was added to 100 parts by mass of RBDD_PL63 obtained by the above steam distillation with a semi-continuous deodorizing apparatus, followed by sufficient stirring at 110°C for 0.5 hours (bleaching: step C1). The activated bleaching earth was removed by filtration to obtain a bleached oil. Steam distillation was carried out by blowing 3 mass parts by mass of steam to 100 parts by mass of the bleached oil for 1.5 hours under the conditions of 200°C and about 266.7 Pa (2 torrs) (deodorization treatment: step C2), and RBDDBD_PL63 was obtained. The SH content and AH content of the obtained RBDDBD_PL63 were measured. Similarly, the monochloropropanol and glycidol contents were also measured. Table 2 presents the results.

| [Table 2] Results of Analyzing Oil in Each Step | | | | |
|---|---|---|---|---|
| | | RBD_ PL63 (Raw Material of Step B) | RBDD PL63 (Resultant Product of Step B) | RBDDBD_ PL63 (Resultant Product of Step C) |
| | Number of Carbon Atoms | | | |
| SH Content (ppm by Mass) | Less Than 20 | Less Than 2 | Less Than 2 | Less Than 2 |
| | 20 to 35 | 10.9 | 3.3 | 4.3 |
| | Over 35 | 7.7 | 7.9 | 8.5 |
| AH Content (ppm by Mass) | Less Than 20 | Less Than 2 | Less Than 2 | Less Than 2 |
| | 20 to 35 | 11.5 | 4.1 | 4.9 |
| | Over 35 | 4.3 | 4.1 | 4.2 |
| | | | | |
| 3-MCPD Content (ppm by Mass) | | 0.48 | 0.69 | 0.68 |
| 2-MCPD Content (ppm by Mass) | | 0.16 | 0.11 | 0.22 |
| Glycidol Content (ppm by Mass) | | 1.55 | 5.5 | 0.80 |

### <Test Example 3 - Step A>

A commercially available crude palm oil was added with 0.05 parts by mass of 85% phosphoric acid and stirred in accordance with a conventional method, followed by phosphoric acid degumming. To 100 parts by mass of the obtained phosphoric acid degummed oil, 1 part by mass of bleaching earth (pH 8.7) was added and sufficiently stirred at 110°C for 0.5 hours (bleaching (alkaline adsorbent treatment): step A1-2). The bleaching earth was removed by filtration to obtain a bleached oil. A semi-continuous deodorizing apparatus was used to carry out steam distillation by blowing 3 mass parts by mass of steam to 100 parts by mass of the bleached oil for 1.5 hours under the conditions of 230°C and about 266.7 Pa (2 torrs) (deodorization treatment: step A2). The obtained palm oil was subjected to dry fractionation in two steps to obtain palm super olein having an iodine value of 63 (RBD_PL63).

### <Test Example 3 - Step B>

The above-obtained RBD_PL63 in an amount of 500 tons was used to carry out steam distillation (265°C, about 266.7 Pa (2 torrs), 3 parts by mass of steam blown to 100 parts by mass of oil and/or fat, duration 1.5 hours) with a semi-continuous deodorizing column, and RBDD PL63 was obtained. The SH content and AH content were measured before and after steam distillation. Similarly, the monochloropropanol and glycidol contents were also measured. Table 3 presents the results. The above steam distillation corresponds to the step B.

### <Test Example 3 - Step C>

Activated bleaching earth (pH 5.0) in an amount of 2.0 parts by mass was added to 100 parts by mass of RBDD_PL63 obtained by the above steam distillation with a semi-continuous deodorizing apparatus, followed by sufficient stirring at 110°C for 0.5 hours (bleaching: step C1). The activated bleaching earth was removed by filtration to obtain a bleached oil. Steam distillation was carried out by blowing 3 mass parts by mass of steam to 100 parts by mass of the bleached oil for 1.5 hours under the conditions of 195°C and about 266.7 Pa (2 torrs) (deodorization treatment: step C2), and RBDDBD PL63 was obtained. The SH content and AH content of the obtained RBDDBD PL63 were measured. Similarly, the monochloropropanol and glycidol contents were also measured. Table 3 presents the results.

| [Table 3] Results of Analyzing Oil in Each Step | | | | |
|---|---|---|---|---|
| | | RBD PL63 (Raw Material of Step B) | RBDD PL63 (Resultant Product of Step B) | RBDDBD PL63 (Resultant Product of Step C) |
| | Number of Carbon Atoms | | | |
| SH Content (ppm by Mass) | Less Than 20 | Less Than 2 | Less Than 2 | Less Than 2 |
| | 20 to 35 | 16.4 | 7.1 | 7.1 |
| | Over 35 | 13.8 | 14.1 | 13.8 |
| AH Content (ppm by Mass) | Less Than 20 | Less Than 2 | Less Than 2 | Less Than 2 |
| | 20 to 35 | 13.5 | 4.3 | 4.5 |
| | Over 35 | 5.1 | 4.5 | 4.7 |
| | | | | |
| 3-MCPD Content (ppm by Mass) | | 0.31 | 0.62 | 0.59 |
| 2-MCPD Content (ppm by Mass) | | 0.11 | 0.15 | 0.15 |
| Glycidol Content (ppm by Mass) | | 1.67 | 5.3 | 0.32 |

### <Test Example 4 - Step A>

A commercially available palm olein (RBD_PL56) was chemically interesterified in accordance with a conventional method. Specifically, the palm olein was sufficiently dried, and 0.15 parts by mass of sodium methoxide was added to 100 parts by mass of the palm olein, followed by interesterification reaction with stirring at 100°C for 20 minutes under reduced pressure (alkaline substance contact treatment: step A1-2). After that, 1 part by mass of a saturated aqueous solution of citric acid was added to 100 parts by mass of reaction oil and/or fat (interesterified oil) to stop the reaction. The interesterified oil and/or fat after reaction termination was washed with 6-time amount of warm water (ion exchanged water at 90°C) (step A1-1) and dried under reduced pressure. To 100 parts by mass of the obtained interesterified oil and/or fat, 2 parts by mass of bleaching earth (pH 8.7) was added and sufficiently stirred at 110°C for 0.5 hours (bleaching (alkaline adsorbent treatment): step A1-2). The bleaching earth was removed by filtration to obtain a bleached oil of the interesterified oil and/or fat (RBDIEB PL56).

### <Test Example 4 - Step B>

Batchwise steam distillation (260°C, about 266.7 Pa (2 torrs), 5 parts by mass of steam blown to 100 parts by mass of oil and/or fat, duration 1.5 hours) was carried out using RBDIEB-PL56 obtained above, and RBDIEBD_PL56 was obtained. The SH content and AH content were measured before and after steam distillation. Similarly, the monochloropropanol and glycidol contents were also measured. Table 4 presents the results. The above steam distillation corresponds to the step B.

### <Test Example 4 - Step C>

Activated bleaching earth (pH 5.0) in an amount of 2 parts by mass was added to 100 parts by mass of RBDIEBD_PL56 obtained by the above steam distillation, followed by sufficient stirring at 110°C for 0.5 hours (bleaching: step CI). The activated bleaching earth was removed by filtration to obtain a bleached oil. Steam distillation was carried out by blowing 5 mass parts by mass of steam to 100 parts by mass of the bleached oil for 1.5 hours under the conditions of 200°C and about 266.7 Pa (2 torrs) (deodorization treatment: step C2), and RBDIEBDBD_PL56 was obtained. The SH content and AH content of the obtained RBDIEBDBD_PL56 were measured. Similarly, the monochloropropanol and glycidol contents were also measured. Table 4 presents the results.

| [Table 4] Results of Analyzing Oil in Each Step | | | | | |
|---|---|---|---|---|---|
| | | RBD_ PL56 (Raw Material of Step A) | RBDIEB_ PL56 (Raw Material of Step B) | RBDIEBD _ PL56 (Resultant Product of Step B) | RBDIEBD BD PL56 (Resultant Product of Step C) |
| | Number of Carbon Atoms | | | | |
| SH Content (ppm by Mass) | Less Than 20 | Less Than 2 | Less Than 2 | Less Than 2 | Less Than 2 |
| | 20 to 35 | 10.6 | 10.7 | 5.5 | 5.5 |
| | Over 35 | 13.3 | 13.3 | 12.5 | 12.5 |
| AH Content (ppm by Mass) | Less Than 20 | Less Than 2 | Less Than 2 | Less Than 2 | Less Than 2 |
| | 20 to 35 | 6.8 | 7.2 | Less Than 2 | Less Than 2 |
| | Over 35 | 4.6 | 4.9 | 3.5 | 3.1 |
| | | | | | |
| 3-MCPD Content (ppm by Mass) | | 5.21 | 0.0 | 0.25 | 0.26 |
| 2-MCPD Content (ppm by Mass) | | 2.33 | 0.0 | 0.09 | 0.10 |
| Glycidol Content (ppm by Mass) | | 10.31 | 72.31 | 8.20 | 0.09 |

## Claims

1. A method of producing a refined oil and/or fat, comprising
step B: a step of steam-distilling a raw material oil and/or fat at 240°C or more, wherein
a content of saturated hydrocarbons having 20 to 35 carbon atoms in the refined oil and/or fat is 10 ppm by mass or less.

2. The method according to claim 1, wherein
the steam distillation of the step B is carried out for 0.5 to 9 hours.

3. The method of producing a refined oil and/or fat according to claim 1 or 2, further comprising, after the step B,
step C: a step of heat-treating the oil and/or fat obtained in the step B, wherein
a content of glycidols in the refined oil and/or fat is 1 ppm by mass or less.

4. The method according to claim 3, wherein
the heat treatment step of the step C is
step C2: a step of steam-distilling the oil and/or fat obtained in the step B at 180 to 220°C.

5. The method according to claim 3, wherein
the heat treatment step of the step C includes
step C1: a step of bringing the oil and/or fat obtained in the step B into contact with an acidic substance, and
step C2: a step of steam-distilling the contacted oil and/or fat at 180 to 220°C.

6. The method according to claim 4 or 5, wherein
the steam distillation of the step C2 is carried out for 0.5 to 9 hours.

7. The method according to any one of claims 1 to 6, further comprising, before the step B,
step A: a step of preparing a raw material oil and/or fat containing mono chloropropanols in an amount of 2 ppm by mass or less.

8. The method according to claim 7, wherein
the raw material oil and/or fat of the step A is obtained by
step A1: a step of dechlorinating the oil and/or fat.

9. The method according to claim 8, wherein
the dechlorination step of the step A1 is
step Al-1: a step of washing the oil and/or fat with dechlorinated water, and/or
step A1-2: a step of bringing the oil and/or fat into contact with an alkaline substance.

10. The method according to claim 8 or 9, wherein
the raw material oil and/or fat of the step A is obtained by
step A2: a step of steam-distilling the oil and/or fat dechlorinated in the step A1 at 210 to 260°C,
which is carried out after the dechlorination step of the step A1.

11. A refined oil and/or fat comprising:
1 to 10 ppm by mass of hydrocarbons having saturated hydrocarbons having 20 to 35 carbon atoms;
0.01 to 2 ppm by mass of glycidols; and
0.1 to 2 ppm by mass of monochloropropanols.
